# EUROPÄISCHE PATENTSCHRIFT

(11) **EP 2 353 904 B1**
(45) Veröffentlichungstag und Bekanntmachung des Hinweises auf die Patenterteilung: **07.01.2015**
(21) Anmeldenummer: 11151076.4
(22) Anmeldetag: 17.01.2011
(51) Int. Cl.: B60J 5/06, B62D 33/02, B62D 33/033, B62D 33/037

(54) **Nutzfahrzeugaufbau mit einer seitlich verschiebbaren Plane**
Side curtain for a commercial vehicle structure
Bâche latérale déplaçable pour un camion de transport

(30) Priorität: 19.01.2010 DE 102010000114
(43) Veröffentlichungstag der Anmeldung: 10.08.2011
(73) Patentinhaber: TSE Trailer-System-Engineering GmbH & Co. KG, 72365 Ratshausen (DE)
(72) Erfinder: Seifritz, Harald, 72364, Obernheim (DE)
(74) Vertreter: Baur & Weber Patentanwälte

(56) Entgegenhaltungen:
- DE-A1- 10 056 632
- DE-A1- 19 714 678
- DE-A1-102006 043 655
- DE-U1- 8 909 127
- GB-A- 2 457 128

## Beschreibung

Die Erfindung betrifft einen Nutzfahrzeugaufbau mit einer flexiblen Plane und verschiebbaren Hängerungen.

Nutzfahrzeugbauten mit einem durch flexible Planen begrenzten Laderaum zeichnen sich durch ein geringes Gewicht und flexible Lademöglichkeiten von der Seite aus. Hierfür kann die die seitliche Öffnung des Laderaums während der Fahrt verschließende flexible Plane verlagert und die seitliche Öffnung des Laderaums frei gegeben werden. Die Verlagerung der Plane zwischen einer freien und einer verschlossenen Seitenöffnung des Laderaums erfolgt typischerweise manuell und ist in der Regel durch den Fahrer des Nutzfahrzeugs vorzunehmen.

Aus der DE 10 2006 043 655 A1 ist ein Laderaumaufbau mit einer seitlichen Wandplane bekannt, bei welchem entlang der Seite des Laderaums in der Fahrposition eine Mehrzahl von regelmäßig aufeinander folgenden Hängerungen zwischen einer Rollenführung in einem Dachholm und einer unteren Schiene entlang eines Bodenrahmens verlaufen. Eine Seitenplane ist in Vertikalschlitzen der Hängerungen gehalten. Die Hängerungen sind nahe bei ihren unteren Enden in einem Gelenk gegen einen in der Fahrposition geraden Verlauf mittels eines Hebelverschlusses knickbar und danach aus der unteren Schiene lösbar. Die aus der unteren Schiene gelösten Hängerungen sind in der Rollenführung des Dachholms in Längsrichtung des Laderaums verschiebbar, wobei die Plane gefaltet und die Seitenöffnung des Laderaums freigegeben wird. Zum Verschließen der Seitenöffnung wird die Plane durch Verschieben der Hängerungen in Längsrichtung gestreckt und nach Einhängen der unteren Enden der Hängerungen in die Schiene am Bodenrahmen werden die Hängerungen mittels der Hebel der Rungenverschlüsse wieder in die gerade Form gebracht. Die Rungenverschlüsse greifen durch die Plane hindurch. Die Unterkante der Plane liegt tiefer als die unteren Enden der Hängerungen. Auf eine Einhängung der Plane in eine Spannkante und ein Verspannen durch Planenspanner kann bei hinreichend geringem gegenseitigem Abstand der Hängerungen verzichtet werden. Die Anordnung ist durch den Aufbau der knickbaren Hängerungen aufwendig und schwer.

Aus der DE 100 56 632 A1 ist ein Ladeaufbau bekannt, bei welchem als Hängerungen steife Latten vorgesehen sind, deren obere Enden mit in einer Rollenführung eines Dachholms laufenden Rollenanordnungen vorgesehen sind und an deren unteren Enden jeweils eine Spannklammer angeordnet ist, die eine Spannkante einer Bodenrahmenschiene untergreift und an der Schiene gespannt und fixiert werden kann. Die Plane ist mit den Latten vernietet und nicht separat gespannt.

Es sind auch Varianten bekannt, bei welchen mit der Plane verbundene Hängerungen bei der Verschiebung auch mit ihren unteren Enden in einer Rahmenschiene geführt sind, die in der Praxis aber bei der Verschiebung der Hängerungen zum Verkanten neigen.

Bei Nutzfahrzeuganordnungen der beschriebenen Art mit verschiebbaren Seitenplanen sind auch Mittelrungen bekannt, welche zwischen einer Bodenrahmenschiene und dem Dachholm verlaufen und den Dachholm abstützen. Zwischen solchen Mittelrungen und Eckrungen sind in Längsrichtung verlaufende Latten zur Ladungssicherung eingehängt. Die Mittelrungen sind gleichfalls in Längsrichtung verschiebbar, aber nicht mit der Seitenplane verbunden.

Der vorliegenden Erfindung liegt die Aufgabe zugrunde, eine insbesondere in der Handhabung für den Benutzer vorteilhafte und den Laderaum zuverlässig begrenzende Nutzfahrzeuganordnung mit einer in Längsrichtung verschiebbaren Plane anzugeben.

Die Erfindung ist im unabhängigen Anspruch beschrieben. Die abhängigen Ansprüche enthalten vorteilhafte Ausgestaltungen und Weiterbildungen der Erfindung.

Die Erfindung geht aus von der Erkenntnis, dass eine an sich bekannte vertikale Verspannung der Plane, welche bei den genannten Hängerungen-Anordnungen als entbehrlich und in der Handhabung zeitraubend beschrieben ist, vorteilhaft für den schmutzdichten Abschluss des Laderaums und für die Stabilisierung der Plane ist. Der bei bekannten Planenverspannungen nachteilige Zeitaufwand wird erheblich verringert, indem die manuelle vertikale Planenverspannung zusammen mit der Festlegung von unteren Enden der Hängerungen in einem einzigen manuellen Betätigungsvorgang eines Spannmittels erfolgt, welches die Festlegung sowohl der Hängerunge als auch der Plane relativ zu einer den Laderaumboden umgebenden Rahmenleiste an der Längsposition der Hängerunge bewirkt. Nachfolgend ist, soweit nicht explizit anders angegeben, jeweils nur von einer Hängerunge und einem dieser zugeordneten Spannmittel und gegebenenfalls weiteren der Hängerunge zugeordneten Elementen die Rede. Für die übrigen Hängerungen gelten die Ausführungen in gleicher Weise.

Vorteilhafterweise ist wenigstens ein mit dem Spannmittel zusammenwirkendes Zugelement vorgesehen, welches vorteilhafterweise flexibel ausgeführt ist. Das Zugelement verläuft vorzugsweise zumindest teilweise unterhalb des Spannmittels und verbindet in der ersten Stellung der Hängerungen bei geschlossener und vertikal verspannter Plane das Spannmittel unter Zug mit einer Haltestruktur, welche tiefer angeordnet ist als die untere Aufnahme für das untere Ende der Hängerunge. Eine solche Haltestruktur kann insbesondere durch eine an sich für Planenverspannungen bekannte Spannkante einer an dem den Boden des Laderaums seitlich angeordneten Rahmenschiene gebildet sein. Eine Haltestruktur kann auch durch eine Einzelstruktur eines vorzugsweise gleichmäßigen Rasters von z. B. Durchbrüchen durch eine Fläche einer Rahmenschiene gebildet sein. Das Zugelement kann dabei vorteilhafterweise von dem Spannmittel bis zu der Haltestruktur im wesentlichen ununterbrochen durchgehend ausgebildet und vorzugsweise mit dem unteren Rand der Plane verbunden, insbesondere vernäht sein. Das Zugelement kann aber auch nur über einen Teil der Distanz zwischen dem Spannmittel und der Haltestruktur durchgehen und eine zugfeste Verbindung zwischen Spannmittel und Haltestruktur in der ersten Stellung der Hängerungen bei verspannter Plane kann über einen Teil der Plane gegeben sein. Die Verbindung des Zugelements und/oder der Plane mit der Haltestruktur kann über ein an sich bekanntes Halte- oder Einhängeelement, beispielsweise einen zum Hintergreifen einer Spannkante ausgebildeten Haken erfolgen.

Das Zugelement kann in anderer Ausführung auch zwischen Spannmittel und der Hängerunge, insbesondere einem unteren Bereich der Hängerunge verlaufen. Das Zugelement kann auch unterhalb des Spannmittels umgelenkt sein und zwei im wesentlichen vertikal parallel verlaufende Abschnitte bei der Umlenkung aufweisen, welche Zugkräfte auf die Plane bzw. die Hängerunge gegen die Haltesstruktur übertragen.

Das Zugelement enthält in bevorzugter Ausführung einen flexiblen textilen Gurt, welcher mittels eines Gurtspanners als Spannmittel spannbar ist.

Das Spannmittel weist vorteilhafterweise einen starren Grundkörper, z. B. ein Gehäuse auf, welcher vorzugsweise an der Hängerunge, insbesondere deren unterem Bereich abgestützt ist, so dass vorteilhafterweise bei der manuellen Betätigung des Betätigungsmittels des Spannmittels eine stabile Abstützung gegeben ist.

Die Hängerunge ist vorteilhafterweise in ihrer Länge zwischen der oberen Rollenführung und der unteren Aufnahme veränderbar. Vorteilhafterweise ist das untere Ende der Hängerunge zum Lösen aus der unteren Aufnahme gegenüber der unteren Aufnahme anhebbar, wobei vorteilhafterweise das untere Ende der Hängerunge während der zweiten Stellung der Hängerunge selbsthaltend in der angehobenen Position verbleibt. Vorteilhafterweise ist hierfür ein Federelement vorgesehen, welches beim Öffnen des Spannmittels durch manuelle Betätigung des Betätigungsmittels auf das untere Ende der Hängerunge eine anhebende Rückstellkraft ausübt. Zur Verlagerung des unteren Endes der Hängerunge in die untere Aufnahme entsprechend der ersten Stellung der Hängerunge bei geschlossener und gespannter Plane wird die Rückstellkraft des Federelements manuell durch Herstellen der Verbindung zwischen dem Spannmittel und der Haltestruktur und durch Schließen des Spannmittels überwunden.

Die Hängerunge ist vorteilhafterweise im wesentlichen stab- und/oder rohrförmig langgestreckt. In bevorzugter Ausführung weist die Hängerunge zwei in ihrer gemeinsamen vertikalen Längsrichtung relativ zueinander verschiebbare Abschnitte auf, welche insbesondere teleskopartig ineinander verschiebbar geführt sein können. Vorzugsweise ist der untere Abschnitt, an welchem das untere Ende der Hängerunge ausgebildet ist, kürzer als der obere Abschnitt.

Die untere Aufnahme ist vorteilhafterweise als eine nach oben offene, in horizontaler Längsrichtung des Nutzfahrzeugs verlaufende Nut in einer seitlich des Bodens des Laderaums angeordneten Rahmenschiene ausgeführt. Die Nut ist in vorteilhafter Weise durch zwei sich trichterförmig nach oben aufweitende schräge Flankenflächen begrenzt, welche das selbsttätige Einführen des unteren Endes der Hängerunge in die Nut begünstigen. In vorteilhafter Weiterbildung kann die Nut Teil einer unteren Rollenführung für eine oder mehrere den Dachholm in Zwischenpositionen zwischen Eckrungen abstützende Mittelrungen, welche bei geöffneter Plane lösbar und in horizontaler Längsrichtung manuell verfahrbar sind, sein.

Die Plane ist vorteilhafterweise an der Hängerunge, insbesondere dem oberen Abschnitt einer teleskopierbaren Hängerunge befestigt, vorzugsweise über eine oder mehrere Nietverbindungen. Die Hängerunge ist vorteilhafterweise an ihrem oberen Ende um ihre eigene vertikale Längsachse schwenkbar mit einer in der oberen Rollenführung des Dachholms laufenden Rollenanordnung verbunden, wodurch sich vorteilhafterweise eine größere Variabilität bei der Faltung der Plane ergibt.

Vorteilhafterweise ist die geschlossene Plane in horizontaler Längsrichtung des Nutzfahrzeugs in an sich gebräuchlicher Weise spannbar, wofür beispielsweise bei einer Eckrunge eine um eine vertikale Achse drehbare Spannwelle vorgesehen sein kann. In vorteilhafter Ausführung können zwischen benachbarten Hängerungen, vorzugsweise über die gesamte horizontale Erstreckung der Plane durchgehende zugfeste flexible Längselemente vorgesehen sein, welche vorteilhafterweise mit der Längsspannung der Plane in horizontaler Längsrichtung spannbar sind und eine zusätzliche Ladungssicherungsfunktion zwischen den Hängerungen erfüllen können. Solche Längselemente können insbesondere durch mit der Plane und/oder mit den Hängerungen verbundene textile Gurte sein.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Schrägansicht eines Nutzfahrzeugs,
- Fig. 2: einen Abschnitt der geschlossenen Planenanordnung von innen,
- Fig. 3: den unteren Bereich der Anordnung nach Fig. 2 von außen,
- Fig. 4: eine Ansicht zu Fig. 3 in Längsrichtung,
- Fig. 5: eine Ansicht nach Fig. 2 bei gelöster Plane,
- Fig. 6: die Anordnung nach Fig. 5 von außen,
- Fig. 7: eine Ansicht zu Fig. 5 in Längsrichtung,
- Fig. 8: eine Ansicht eines oberen Planenabschnitts in Längsrichtung,
- Fig. 9: eine Federabstützung der Hängerunge oben.

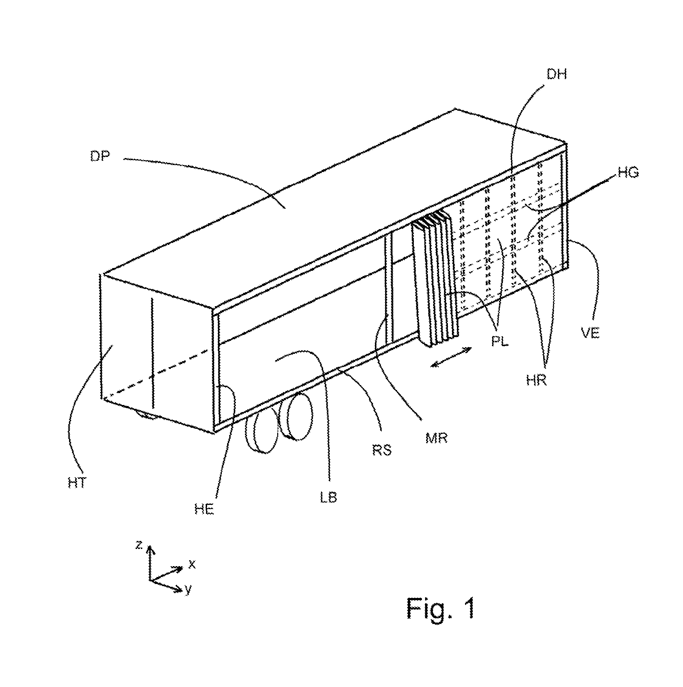

Fig. 1 zeigt in einer Ansicht von schräg hinten einen Laderaumaufbau einer Nutzfahrzeuganordnung, beispielsweise eines Stattelaufliegers. Der Laderaum über einem Laderaumboden LB ist nach hinten durch eine Hecktüranordnung HT, nach oben durch eine Dachplane DP und an beiden Seiten durch je eine Seitenplane PL begrenzt. Die Seitenwände des Laderaums können zum Be- und Entladen geöffnet werden, indem die Planenanordnung in horizontaler Längsrichtung x des Laderaumaufbaus verschoben und dabei die Plane PL gefaltet wird. In Fig. 1 ist die Plane PL der in Fahrtrichtung rechtsseitigen Planenanordnung unter teilweiser Öffnung der Seitenwand des Laderaums vom Heck des Nutzfahrzeugs weg verschoben und der verschobene Teil der Plane liegt mit im wesentlichen vertikal verlaufenden Falten am vorderen Rand des geöffneten Teils der Seitenwand.

Der Laderaumaufbau enthält in an sich gebräuchlicher Weise am seitlichen Rand des Laderaumbodens jeweils eine Rahmenschiene RS, zwei heckseitige Eckrungen HE, zwei frontseitige Eckrungen VE und zwei die heckseitigen und frontseitigen Eckrungen oben verbindende Dachholme DH. Insbesondere bei langen Laderaumaufbauten können eine oder mehrere, bei geschlossenen Seitenwänden in Längsrichtung x von den Eckrungen beabstandet angeordnete Mittelrungen MR zur Abstützung des Dachholms vorgesehen sein. Die Mittelrungen sind in einer oberen Rungenführung des Dachholms und einer unteren Rungenführung der Rahmenschiene über Rollenanordnungen in Längsrichtung x bei geöffneter Plane PL verschiebbar geführt.

Die Planenanordnung enthält zusätzlich zu der flexiblen Plane PL selbst eine Mehrzahl von bei geschlossener Plane zur vertikalen z-Richtung parallel zwischen Dachholm und Rahmenschiene verlaufende Hängerungen, welche in vorzugsweise regelmäßigen Abständen aufeinanderfolgen und mit der Plane verbunden sind. Der horizontale Abstand benachbarter Hängerungen liegt vorteilhafterweise zwischen 30 cm und 100 cm. Vorteilhafterweise können die Hängerungen durch zwischen benachbarten Rungen verlaufende zugfeste Längselemente HG verbunden sein. Diese zugfesten Längselemente können insbesondere flexibel, vorzugsweise als textile Gurte ausgeführt sein, die vorteilhafterweise mit der Plane verbunden, insbesondere vernäht oder vernietet sein können und mit der Plane faltbar sind. Die zugfesten Längselemente können bei geschlossener Plane neben den Hängerungen eine Ladungssicherungsfunktion übernehmen. Die zugfesten Längselemente sind vorzugsweise als bei geschlossener Seitenwand in Längsrichtung x durchgehende Gurte ausgeführt, welche in zu der Plane entsprechender Art und in Längsrichtung x zwischen den heckseitigen und frontseitigen Eckrungen verspannbar sind, wofür separate Spanneinrichtungen für die einzelnen Längselemente vorhanden sein können oder vorzugsweise eine für alle solche Längselemente eine gemeinsame Spaneinrichtung vorgesehen ist, welche insbesondere auch zugleich die Spanneinrichtung für die Plane in Längsrichtung bilden kann.

Die Hängerungen sind vorteilhafterweise als in sich biegesteife Elemente, insbesondere in Form von Stäben und/oder Rohren und/oder Profilen ausgeführt und in einer ersten Stellung bei durch die Plane PL geschlossener Seitenwand des Laderaums im Fahrbetrieb des Nutzfahrzeugs mit ihren oberen Enden am Dachholm DH und mit ihren unteren Enden an der Rahmenschiene RS gegen eine Verschiebung in Querrichtung y formschlüssig abgestützt und dienen hierdurch zur Ladungssicherung.

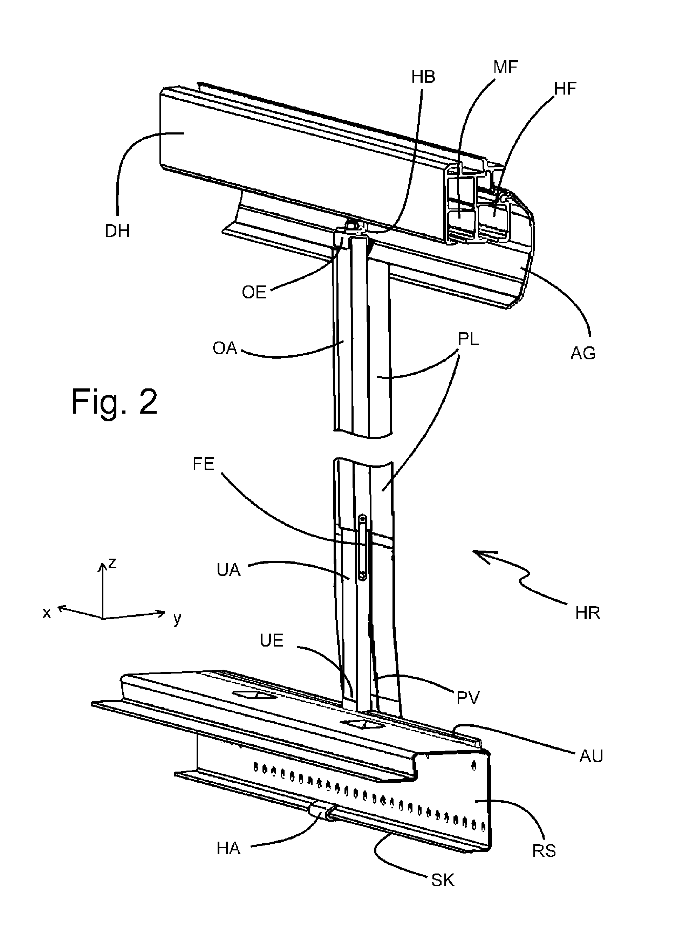

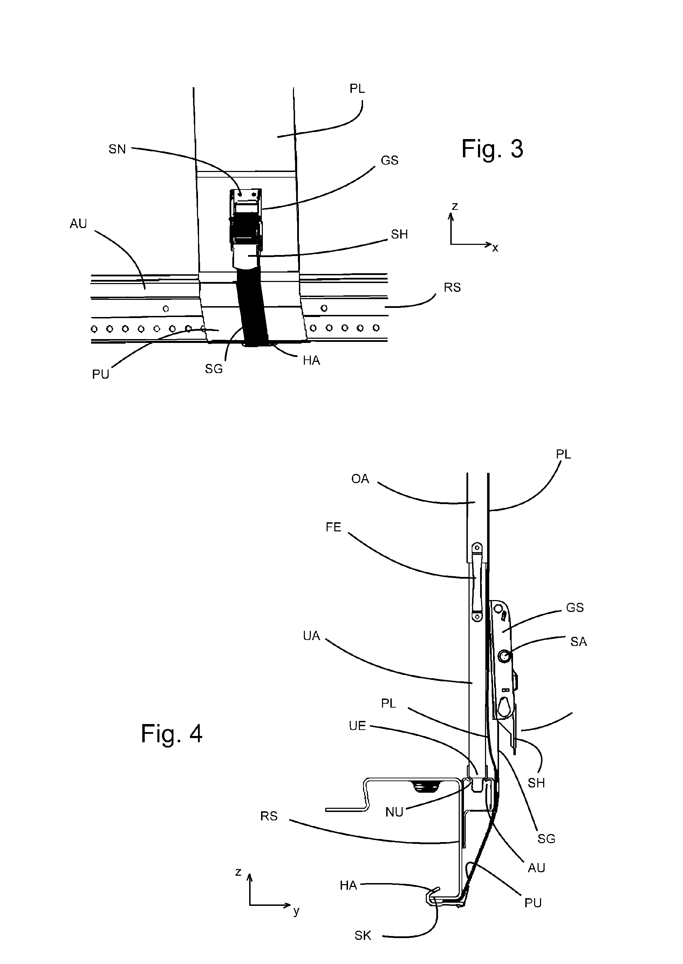

In Fig. 2 ist ein Ausschnitt aus der geschlossenen Planenanordnung mit einer vorteilhaften Ausführung einer Hängerunge HR in einer Schrägansicht vom Laderaum aus mit einem oberen und einem unteren Bereich dargestellt. Ein mittlerer Bereich ohne für die Erfindung relevante Elemente ist verkürzt und unterbrochen dargestellt. Fig. 3 zeigt den unteren Bereich der Fig. 2 in Schrägansicht von außen. Fig. 4 zeigt eine Schnittdarstellung des unteren Bereichs mit einer y-z-Schnittebene und Blickrichtung in Längsrichtung x der Nutzfahrzeuganordnung.

Die Hängerunge HR ist im bevorzugten skizzierten Ausführungsbeispiel teleskopierbar ausgeführt mit einem oberen Abschnitt OA und einem unteren Abschnitt UA. Der untere Abschnitt ist teilweise innerhalb des unteren Endes des oberen Abschnittes in vertikaler z-Richtung verschiebbar geführt, so dass die Hängerunge in ihrer Längserstreckung zwischen ihrem oberen Ende OE und ihrem unteren Ende UE längenveränderlich ist. Die relative Führung zwischen oberem Abschnitt OA und unterem Abschnitt UA ist so, dass die zusammengesetzte Hängerunge HR zwar längenveränderlich, aber quer zu ihrer eigenen Längsrichtung in jeder der im Betrieb auftretenden Längserstreckungen biegesteif ist und insbesondere in der in Fig. 2 dargestellten ersten Stellung, welche die Hängerunge im Fahrbetrieb des Nutzfahrzeugs einnimmt, eine stabile seitliche Abstützung für im Laderaum befindliches Ladegut bietet.

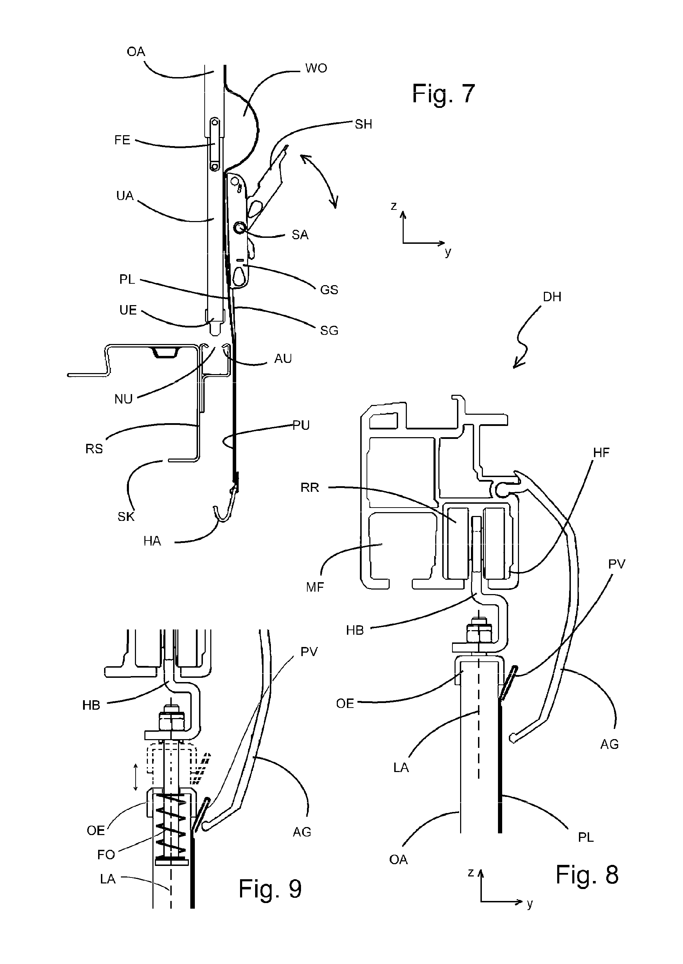

Die Hängerunge ist mit ihrem oberen Ende über eine Rollenanordnung in einer Rollenführung HF des als Profil ausgeführten Dachholms in x-Richtung verschiebbar geführt. Die Rollenanordnung enthält typischerweise zwei in x-Richtung voneinander beabstandete Rollen, welche an einem abgewinkelten Halteblech drehbar gelagert sind. Das Halteblech HB ist mit dem oberen Ende OE des oberen Abschnitts OA der Hängerunge verbunden. Die Art der Verbindung und der Aufbau des oberen Bereichs der Planenanordnung mit einer abdichtenden in Längsrichtung x verlaufenden Gummibahn AG und einer Rollenführung MF für Schieberungen ist anhand der Fig. 8 noch näher beschrieben.

Die Hängerunge greift in der in Fig. 2 skizzierten ersten Stellung mit ihrem unteren Ende UE in eine in der Rahmenschiene RS ausgebildete nutförmige untere Aufnahme AU ein und ist in dieser Aufnahme AU in horizontaler Querrichtung y formschlüssig abgestützt. Durch Andrücken des unteren Endes UE an die untere Aufnahme AU beim vertikalen Spannen der Plane kann eine Sicherung des unteren Endes UE in der unteren Aufnahme AU gegen Verrutschen in Längsrichtung gegeben sein. Im geschlossenen Zustand der Plane ist die x-Position der Hängerungen auch durch deren Verbindung mit der in Längsrichtung verspannten Plane gesichert.

In Fig. 2 und in folgenden Figuren ist die Plane PL durch einen in Längsrichtung x nur eine geringe Ausdehnung aufweisenden Streifen repräsentiert, um die im übrigen nicht strukturierte Plane hervorzuheben und um andere Komponenten nicht zu verdecken. Die Plane ist im geschlossenen Zustand der Seitenwände des Laderaums entsprechend der Fahrposition des Nutzfahrzeugs über die gesamte Länge von Laderaum, Dachholm DH und Rahmenschiene RS durchgehend. In vertikaler z-Richtung erstreckt sich die Plane bis unter die untere Aufnahme AU der Rahmenschiene und reicht vorteilhafterweise, wie insbesondere in Fig. 4 erkennbar, bis unter eine untere Umlenkkante der Rahmenschiene.

Zwischen die Plane PL und die Hängerunge HR kann vorteilhafterweise eine streifenförmige Verstärkung der Plane eingefügt sein, welche mit der Plane vorteilhafterweise vernäht oder verklebt sein kann. Die Hängerunge HR kann auch durch Laschen oder durch eine in vertikaler Richtung durchgehende Planentasche an der Innenseite der Plane umgriffen sein. Vorteilhafterweise ist die Plane PL an mehreren Punkten fest mit der Hängerunge HR verbunden, insbesondere vernietet.

Zwischen dem unteren Abschnitt UA der Hängerunge und deren oberem Abschnitt OA, welche in z-Richtung relativ zueinander verschiebbar ausgeführt sind, ist ein Federelement FE wirksam, welches in der skizzierten Ausführung vorteilhafterweise an einer in x-Richtung weisenden Außenseite der Hängerunge angeordnet ist und dabei vorteilhafterweise aus einem gummielastisch dehnbarem Material besteht. Um eine Verkantungsgefahr der ineinander verschiebbaren Abschnitte der Hängerunge zu vermindern, können zwei Federelemente an in x-Richtung entgegen gesetzten Seiten der Hängerunge angeordnet sein. In anderer, nicht skizzierter Ausführung kann ein Federelement auch innerhalb des rohrförmig hohl ausgeführten oberen Abschnitts OA der Hängerunge angeordnet und beispielsweise als metallisches gewendeltes Federelement ausgeführt sein.

Das Federelement bewirkt vorteilhafterweise in der in Fig. 2 skizzierten Position eine in z-Richtung wirkende Kraft zwischen den beiden Abschnitten der teleskopierbaren Hängerunge, welche bestrebt ist, den unteren Abschnitt UA relativ zu dem oberen Abschnitt OA anzuheben. In der in Fig. 2 skizzierten ersten Stellung der Hängerunge bzw. der Planenanordnung ist die gezeichnete Position des unteren Abschnitts mit Eingriff des unteren Endes UE in die untere Aufnahme AU entgegen der Rückstellkraft des Federelements gesichert. Zur Sicherung des Eingriffs des unteren Endes in die Aufnahme AU ist jeder Hängerunge eine Planenspanneinrichtung zugeordnet, welche zum einen für eine Sicherung des Eingriffs des unteren Endes UE der Hängerunge in die untere Aufnahme AU und zum anderen für die Verspannung der Plane ein für beide Funktionen gemeinsames Betätigungselement aufweist. Das gemeinsame Spannmittel ist in bevorzugter Ausführung ein Gurtspanner, welcher mit einem als zugfester Gurt ausgeführten Zugelement zusammenwirkt, um den unteren Abschnitt UA und die Plane gegen eine Haltestruktur der Rahmenschiene RS zu verspannen. Die Verspannung einer Plane mittels eines Gurtspanners gegen eine Haltestruktur einer Rahmenschiene RS ist an sich bekannt. Von besonderem Vorteil bei der vorliegenden Erfindung ist die zusätzliche Funktion einer Planenspanneinrichtung zum Festlegen bzw. Lösen des Eingriffs des unteren Endes der Hängerunge in der Aufnahme AU der Rahmenschiene RS.

Die Haltestruktur der Rahmenschiene kann in an sich gebräuchlicher Weise als eine unterhalb der Aufnahme AU liegende, dieser abgewandte Spannkante SK der Rahmenschiene RS gebildet sein, welche durch ein zugfest mit dem Spannmittel verbundenes Halteelement, beispielsweise in Form eines Hakens HA, hintergriffen wird. Andere bekannte Haltestrukturen sind gleichfalls geeignet. Die durchgehende Spannkante ist von besonderem Vorteil, da ein Einhängen des Halteelements in die Haltestruktur hier besonders einfach und schnell und ohne Beachtung einer Längsposition erfolgen kann.

Fig. 3 zeigt eine Ansicht der Planenanordnung in der ersten Stellung mit Darstellung der Betätigungseinrichtung. Ein Gehäuse GS einer Planenspanneinrichtung ist an der Außenseite der Plane angeordnet und durch diese hindurch, beispielsweise mittels Niet- oder Schraubverbindungen SN, mit dem unteren Abschnitt UA der Hängerunge verbunden. Die Planenspanneinrichtung enthält einen manuell betätigbaren Spannhebel SH, welcher um eine typischerweise horizontale Hebelschwenkachse SA zwischen einer in Fig. 4 dargestellten geschlossenen Stellung und einer in Fig. 7 dargestellten geöffneten Stellung manuell verschwenkbar ist. Der Spannhebel SH kann vorteilhafterweise in der in Fig. 4 dargestellten geschlossenen Stellung gegen unbeabsichtigtes Lösen gesichert sein.

Der Spannhebel SH wirkt mit einem Spanngurt SG zusammen, welcher von dem Spannhebel zu dem Haken HA als Halteelement führt. Der Spanngurt SG kann in seinem Verlauf zwischen dem Spannhebel und dem Haken HA abschnittsweise mit der Plane verbunden, insbesondere verklebt oder vernäht sein.

In der in Fig. 4 dargestellten ersten Stellung der Hängerunge bzw. der Planenanordnung mit geschlossenem Spannmittel ist der untere Planenrand PU durch die Verspannung des Spanngurtes SG gegen die Spannkante SK relativ zu der Rahmenschiene RS festgelegt. Vorzugsweise reicht die Plane mit ihrer Unterkante bis unter eine untere Umlenkung der Rahmenschiene und ist dort zwischen Halteelement HA und Rahmenschiene bzw. zwischen Spanngurt und Rahmenschiene klemmend festgelegt, so dass der Laderaum hier zuverlässig auch gegen aufgewirbeltes Spritzwasser zuverlässig abgedichtet ist.

Wie aus Fig. 4 ersichtlich ist, ist die Rahmenschiene RS mit der unteren Aufnahme zweiteilig ausgeführt, wobei ein Hauptkörper der Rahmenschiene aus einem dickeren Blech geformt und die untere Aufnahme an diesem Grundkörper angefügt ist. Die untere Aufnahme kann in vorteilhafter Weiterbildung bei Ausführungen von Nutzfahrzeuganordnungen mit längsverschiebbaren Mittelrungen zugleich als Rollenführung für an unteren Enden von verschiebbaren Mittelrungen angeordneten Rollenanordnungen dienen. Die untere Aufnahme weist vorteilhafterweise eine in Längsrichtung durchgehende Nut NU auf, in welcher ein Fortsatz am unteren Ende der Hängerunge eingreift. Die Nut NU ist seitlich durch schräg verlaufende Flankenflächen begrenzt, welche sich nach oben trichterförmig aufweiten, so dass ein zuverlässiges Eingleiten des Fortsatzes am unteren Ende der Hängerunge in die Nut gewährleistet ist.

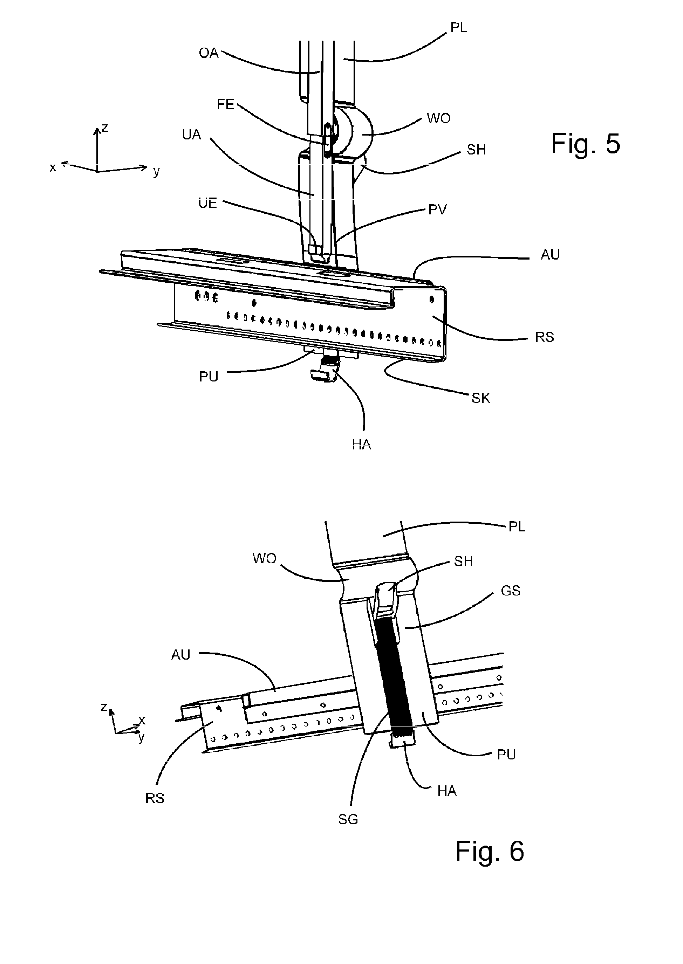

Zum Wechseln von der in Fig. 2 bis Fig. 4 skizzierten ersten Stellung der Planenanordnung mit in die untere Aufnahme AU eingreifenden unteren Enden der Hängerungen und mit verspannter Plane in eine zweite Stellung der Planenanordnung mit aus der unteren Aufnahme AU gelösten unteren Enden der Hängerungen und unverspannter Plane, in welcher die Hängerungen in Längsrichtung x unter Auffaltung der Plane zur Freigabe der seitlichen Öffnung des Laderaums verschiebbar sind, wird der Spannhebel SH als Betätigungsmittel des Spannmittels aus der in Fig. 4 skizzierten geschlossenen Position des Spannmittels in die in Fig. 6 und Fig. 7 dargestellte obere, geöffnete Position verschwenkt. Hierdurch wird die Verspannung des Spanngurts SG gegen die Haltekante SK der Rahmenschiene gelockert und der Haken HA kann vom Benutzer aus der Spannkante SK ausgehängt werden. Die durch das Federelement bewirkte Rückstellkraft zieht dann den unteren Abschnitt UA gegen den oberen Abschnitt OA der Hängerunge nach oben und löst das untere Ende UE der Hängerunge aus der unteren Aufnahme UA, so dass die Hängerunge sowohl in Längsrichtung x verschiebbar ist als auch, soweit erforderlich, in begrenztem Umfang seitlich vom Laderaum weg verschwenkbar ist. In der skizzierten Ausführung mit sowohl am unteren Abschnitt als auch am oberen Abschnitt der Hängerunge kann sich dabei eine leichte Auswölbung WO der Plane ergeben.

Vorteilhafterweise ist in der gelösten zweiten Stellung der Hängerunge, wie insbesondere in Fig. 8 dargestellt, die Hängerunge bzw. deren oberer Abschnitt OA relativ zu ihrer in der oberen Rollenführung HF geführten Rollenanordnung mit Rollen RR und Halter HB um die der Hängerunge eigene Längsachse LA, welche in der ersten Stellung vertikal verläuft, um ein begrenztes Maß verschwenkbar. Hierdurch kann vorteilhafterweise die Hängerunge Faltbewegungen der Plane beim Aufschieben der Seitenplanenanordnung folgen, so dass sich mehr Freiheiten beim Falten der Plane und damit eine einfachere Bedienbarkeit ergeben. An der Oberkante der Plane PL kann die bereits genannte Planenverstärkung PV metallische Kanten des oberen Endes der Hängerunge abdecken. Die Oberkante der Plane und die Aufhängung der Hängerungen an den Haltern HB sind durch eine in Längsrichtung x durchgehende Abdeckleiste AG aus einem flexiblen, insbesondere gummielastischen Material abgedeckt. Die Leiste AG kann insbesondere beim Falten der Plane während der Öffnung der Seitenwand des Laderaums seitlich den durch die aufgefaltete Plane gebildeten Schlaufen nachgeben.

Der untere Abschnitt OA der Hängerunge HR verbleibt in der ersten Stellung der Planenanordnung bzw. der Hängerungen durch die Rückstellkraft des Federelements FE selbsthaltend in der relativ zum oberen Abschnitt OA angehobenen Stellung, in welcher das untere Ende UE des unteren Abschnitts UA der Hängerunge aus dem Eingriff mit der unteren Aufnahme AU gelöst ist. Wenn die Seitenwand des Laderaums durch Zuziehen der Plane aus der aufgefalteten Stellung in die gestreckte Stellung wieder geschlossen ist, werden die Hängerungen wieder in die in Fig. 2 bis Fig. 4 dargestellte erste Stellung verlagert, indem der Benutzer zuerst die Haken HA in die Spannkante SK der Rahmenschiene RS einhängt, wobei bereits eine erste Verlängerung der Hängerunge entgegen der Rückstellkraft des Federelements stattfinden kann und der Spanngurt SG bereits unter dieser Rückstellkraft leicht vorgespannt ist und die Einhängung des Hakens HA in die Spannkante SK zuverlässig erhalten bleibt. Danach wird der Spannhebel SH aus der in Fig. 7 dargestellten angehobenen, geöffneten Position um die Hebelschwenkachse SA nach unten geschwenkt. Dabei wird die Spannung des Spanngurts SG verstärkt und das Gehäuse GS des Gurtspanners zusammen mit dem unteren Abschnitt UA nach unten gezogen, wobei das untere Ende UE der Hängerunge in auch im Fahrbetrieb zuverlässig festen Eingriff mit der Nut der unteren Aufnahme AU gebracht wird. Eine getrennte Festlegung der Hängerunge ist vorteilhafterweise nicht erforderlich, da diese zusammen mit dem Spannen des Spanngurtes gleichzeitig erfolgt, so dass die Handhabung der Planenanordnung durch den Benutzer sowohl beim Festlegen als auch beim Lösen der Planenanordnung vereinfacht wird und zugleich dennoch eine zuverlässige Festlegung der Planenanordnung im Fahrbetrieb gewährleistet ist.

Das Gehäuse der Planenspanneinrichtung ist nicht zwingend fest mit dem unteren Abschnitt UA der Hängerunge verbunden. Es kann auch eine anderweitige zugfeste Verbindung, beispielsweise über einen Gurtabschnitt gegeben sein. Der Spanngurt kann auch an einer unterhalb der Aufnahme AU liegenden Position umgelenkt sein, wobei dann vorteilhafterweise die Plane nicht fest mit dem unteren Abschnitt UA verbunden ist, sondern die entgegen gesetzten Enden des Spanngurts getrennt auf den unteren Abschnitt UA der Hängerunge einerseits und die Plane andererseits wirken und der Gurtspanner als Spannmittel an einem der Gurtenden eingefügt ist.

Fig. 9 zeigt einen Ausschnitt des oberen Endes einer Hängerunge in einer alternativen Ausführung, in welcher das obere Ende der Hängerunge relativ zu dem Haltebügel HB, dessen Vertikalposition relativ zu dem Dachholm als fest angesehen werden kann, vertikal verschiebbar und durch die Rückstellkraft einer Feder FO nach oben gedrückt ist. Mit unterbrochener Linie eingezeichnet ist die durch die Planenspanneinrichtung am unteren Rand der Plane bewirkte und gesicherte abgesenkte Stellung der Hängerunge bei gespannter Feder FO, aus welcher die Hängerunge nach Lösen der Planenspanner am unteren Planenrand unter Wirkung der Rückstellkraft der Feder FO angehoben wird. Die angehobene Stellung ist mit unterbrochener Linie eingezeichnet. Bei dieser Ausführung kann die Hängerunge einteilig ausgeführt sein und eine Auswölbung der Plane entsprechend WO in Fig. 5 tritt auch bei angehobener Hängerunge nicht auf.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Nutzfahrzeugaufbau mit einer einen Laderaum seitlich begrenzenden Schiebeplanenanordnung, welche eine Mehrzahl von in Längsrichtung verschiebbaren und bei der Verschiebung in einer oberen Führung eines Dachholms (DH) geführten Hängerungen (HR) und eine mit diesen verbundene flexible Plane (PL) enthält, wobei
- die Hängerungen in einer ersten Stellung an ihren oberen Enden (OE) in der oberen Führung und an ihren unteren Enden (UE) in einer unteren Aufnahme (AU) eines Bodenrahmens (RS) quer zur Längsrichtung abgestützt und in eine zweite Stellung verlagerbar sind, in welcher die Hängerungen aus der unteren Aufnahme gelöst und mit der Plane in Seitenrichtung verschiebbar sind,
- die Plane an den Hängerungen entsprechenden Längspositionen der Längsrichtung durch Spanneinrichtungen vertikal verspannbar und lösbar ist, **dadurch gekennzeichnet, dass**
- jeder Hängerunge ein Spannmittel mit einem manuell handhabbaren Betätigungsmittel (SH) zugeordnet ist, wobei das Spannmittel zur Verlagerung einer Hängerunge zwischen der ersten und zweiten Stellung und gleichzeitig zum vertikalen Verspannen oder Lösen der Plane in jeweils einem einheitlichen Betätigungsvorgang des Betätigungsmittels ausgebildet ist.

2. Nutzfahrzeugaufbau nach Anspruch 1, **dadurch gekennzeichnet, dass** das Spannmittel mit einem vorzugsweise flexiblen Zugelement (SG) zusammenwirkt.

3. Nutzfahrzeugaufbau nach Anspruch 2, **dadurch gekennzeichnet, dass** das Zugelement unterhalb des Spannmittels verläuft und in der ersten Stellung der Hängerungen das Spannmittel unter Zug mit einer unter der unteren Aufnahme liegenden Haltestruktur des Bodenrahmens verbindet.

4. Nutzfahrzeugaufbau nach Anspruch 2, **dadurch gekennzeichnet, dass** das Zugelement zumindest abschnittsweise fest mit einem unteren Randbereich der Plane verbunden oder durch diesen gebildet ist.

5. Nutzfahrzeugaufbau nach Anspruch 2 oder 3, **dadurch gekennzeichnet, dass** das Zugelement zumindest teilweise durch einen flexiblen Gurt gebildet ist und das Spannmittel einen Gurtspanner enthält.

6. Nutzfahrzeugaufbau nach einem der Ansprüche 2 bis 4, **dadurch gekennzeichnet, dass** das Spannmittel fest mit der jeweiligen Hängerunge in deren unterem Bereich verbunden sind und das Zugelement jeweils zwischen Spannmittel und Haltestruktur verläuft.

7. Nutzfahrzeugaufbau nach einem der Ansprüche 2 bis 4, **dadurch gekennzeichnet, dass** das Zugelement an entgegen gesetzten Enden mit Hängerunge bzw. Plane verbunden ist und der Haltestruktur zuweisend umgelenkt ist, und dass das Spannmittel in den Verlauf des Zugelements eingefügt oder an einem Ende des Zugelements angeordnet ist.

8. Nutzfahrzeugaufbau nach einem der Ansprüche 1 bis 7, **dadurch gekennzeichnet, dass** das untere Ende der Hängerunge zum Lösen aus der unteren Aufnahme anhebbar ist.

9. Nutzfahrzeugaufbau nach Anspruch 8, **dadurch gekennzeichnet, dass** das untere Ende der Hängerunge in deren zweiter Stellung selbsthaltend in der angehobenen Position bleibt.

10. Nutzfahrzeugaufbau nach Anspruch 9, **dadurch gekennzeichnet, dass** das untere Ende der Hängerunge entgegen einer Rückstellkraft in den Eingriff mit der unteren Aufnahme entsprechend der ersten Stellung der Hängerunge verlagerbar ist.

11. Nutzfahrzeugaufbau nach Anspruch 10, **dadurch gekennzeichnet, dass** die Rückstellkraft durch ein Federelement aufgebracht ist.

12. Nutzfahrzeugaufbau nach einem der Ansprüche 1 bis 11, **dadurch gekennzeichnet, dass** die Hängerunge an ihrem oberen Ende relativ zu dem Dachholm vertikal verlagerbar ist.

13. Nutzfahrzeugaufbau nach einem der Ansprüche 1 bis 12, **dadurch gekennzeichnet, dass** die Länge der Hängerungen zwischen deren unteren Enden und der oberen Führung veränderbar ist.

14. Nutzfahrzeugaufbau nach Anspruch 13, **dadurch gekennzeichnet, dass** die Hängerunge einen unteren Abschnitt und einen oberen Abschnitt aufweist, welche teleskopartig relativ zueinander geführt verschiebbar sind.

15. Nutzfahrzeugaufbau nach einem der Ansprüche 1 bis 14, **dadurch gekennzeichnet, dass** die untere Aufnahme eine Schiene mit einer nach oben offenen, vorzugsweise trichterförmig erweiterten Nut aufweist.

16. Nutzfahrzeugaufbau nach Anspruch 15, **dadurch gekennzeichnet, dass** die Hängerunge mittels des Spannmittels vertikal gegen die Schiene verspannbar ist und vorzugsweise in der ersten Stellung gegen Verschieben in Längsrichtung gesichert ist

17. Nutzfahrzeugaufbau nach einem der Ansprüche 1 bis 16, **dadurch gekennzeichnet, dass** die untere Aufnahme Teil einer Rollenführungsbahn für wenigstens eine längsverfahrbare Mittelrunge ist.

18. Nutzfahrzeugaufbau nach einem der Ansprüche 1 bis 17, **dadurch gekennzeichnet, dass** die geschlossene Plane in Längsrichtung verspannbar ist.

19. Nutzfahrzeugaufbau nach einem der Ansprüche 1 bis 18, **dadurch gekennzeichnet, dass** zwischen benachbarter Hängerungen wenigstens ein, vorzugsweise mehrere flexible zugfeste Längselemente vorgesehen sind.

20. Nutzfahrzeugaufbau nach Anspruch 19, **dadurch gekennzeichnet, dass** die Längselemente über die Länge der Plane in Längsrichtung durchgehend ausgebildet und in Längsrichtung verspannbar ist.

## Claims

1. Commercial vehicle structure with a sliding tarpaulin arrangement which laterally bounds a load compartment and which contains a plurality of suspension posts (HR) which are displaceable in the longitudinal direction and, during the displacement, are guided in an upper guide of a roof pillar (DH), and a flexible tarpaulin (PL) which is connected to said suspension posts, wherein
- the suspension posts, in a first position, are supported transversely with respect to the longitudinal direction at the upper ends (OE) thereof in the upper guide and at the lower ends (UE) thereof in a lower receptacle (AU) of a floor frame (RS) and are shiftable into a second position in which the suspension posts are released from the lower receptacle and are displaceable together with the tarpaulin in the lateral direction,
- the tarpaulin is vertically braceable and releasable by clamping devices at longitudinal positions, which correspond to the suspension posts, in the longitudinal direction, **characterized in that**
- each suspension post is assigned a clamping means with a manually handleable actuating means (SH), wherein the clamping means is designed for shifting a suspension post between the first and second position and at the same time for the vertical bracing or release of the tarpaulin in a respectively uniform actuating operation of the actuating means.

2. Commercial vehicle structure according to Claim 1, **characterized in that** the clamping means interacts with a preferably flexible tension element (SG).

3. Commercial vehicle structure according to Claim 2, **characterized in that** the tension element runs below the clamping means and, in the first position of the suspension posts, connects the clamping means under tension to a holding structure of the floor frame, the holding structure being located under the lower receptacle.

4. Commercial vehicle structure according to Claim 2, **characterized in that** the tension element is fixedly connected at least in sections to a lower edge region of the tarpaulin or is formed by said lower edge region.

5. Commercial vehicle structure according to Claim 2 or 3, **characterized in that** the tension element is at least partially formed by a flexible strap and the clamping means contains a strap tensioner.

6. Commercial vehicle structure according to one of Claims 2 to 4, **characterized in that** the clamping means is fixedly connected to the respective suspension post in the lower region thereof, and the tension element runs in each case between clamping means and holding structure.

7. Commercial vehicle structure according to one of Claims 2 to 4, **characterized in that** the tension element is connected at opposite ends to suspension post or tarpaulin and is deflected in a manner pointing towards the holding structure, and **in that** the clamping means is fitted into the profile of the tension element or is arranged at one end of the tension element.

8. Commercial vehicle structure according to one of Claims 1 to 7, **characterized in that** the lower end of the suspension post is raiseable out of the lower receptacle for release purpose.

9. Commercial vehicle structure according to Claim 8, **characterized in that** the lower end of the suspension post, in the second position thereof, remains in the raised position in a self-locking manner.

10. Commercial vehicle structure according to Claim 9, **characterized in that** the lower end of the suspension post is shiftable counter to a resetting force into the engagement of the lower receptacle, corresponding to the first position of the suspension post.

11. Commercial vehicle structure according to Claim 10, **characterized in that** the resetting force is applied by a spring element.

12. Commercial vehicle structure according to one of Claims 1 to 11, **characterized in that** the suspension post is shiftable vertically at the upper end thereof relative to the roof pillar.

13. Commercial vehicle structure according to one of Claims 1 to 12, **characterized in that** the length of the suspension posts between the lower ends thereof and the upper guide is changeable.

14. Commercial vehicle structure according to Claim 13, **characterized in that** the suspension post has a lower section and an upper section which are displaceable in a manner guided telescopically relative to each other.

15. Commercial vehicle structure according to one of Claims 1 to 14, **characterized in that** the lower receptacle has a rail with a groove which is open upwards and is preferably expanded in a funnel-shaped manner.

16. Commercial vehicle structure according to Claim 15, **characterized in that** the suspension post is vertically braceable against the rail by means of the clamping means and, in the first position, is preferably secured against displacement in the longitudinal direction.

17. Commercial vehicle structure according to one of Claims 1 to 16, **characterized in that** the lower receptacle is part of a roller guide track for at least one longitudinally movable central post.

18. Commercial vehicle structure according to one of Claims 1 to 17, **characterized in that** the closed tarpaulin is braceable in the longitudinal direction.

19. Commercial vehicle structure according to one of Claims 1 to 18, **characterized in that** at least one, preferably more than one flexible, tension-proof longitudinal element is provided between adjacent suspension posts.

20. Commercial vehicle structure according to Claim 19, **characterized in that** the longitudinal elements are formed continuously in the longitudinal direction over the length of the tarpaulin and are braceable in the longitudinal direction.

## Revendications

1. Carrosserie de véhicule utilitaire comprenant un agencement de bâche coulissante délimitant latéralement un espace de chargement, lequel agencement de bâche coulissante comporte une pluralité de ranchers pendants (HR) pouvant coulisser dans la direction longitudinale et guidés dans un guide supérieur d'un longeron de toit (DH) lors du coulissement et une bâche flexible (PL) reliée à ceux-ci,
- les ranchers pendants étant, dans une première position, supportés transversalement à la direction longitudinale dans le guide supérieur à leurs extrémités supérieures (OE) et dans un logement inférieur (AU) d'un cadre de plancher (RS) à leurs extrémités inférieures (UE) et étant déplaçables dans une deuxième position dans laquelle les ranchers pendants son détachés du logement inférieur et peuvent coulisser avec la bâche dans la direction latérale,
- la bâche pouvant être détachée et tendue verticalement par des dispositifs de tension à des positions longitudinales de la direction longitudinale correspondant aux ranchers pendants, **caractérisée en ce**
- **qu'**un moyen de tension comprenant un moyen d'actionnement (SH) pouvant être manipulé manuellement est associé à chaque rancher pendant, le moyen de tension étant réalisé pour déplacer un rancher pendant entre la première et la deuxième position et pour simultanément détacher ou tendre verticalement la bâche par une opération d'actionnement unitaire respective du moyen d'actionnement.

2. Carrosserie de véhicule utilitaire selon la revendication 1, **caractérisée en ce que** le moyen de tension coopère avec un élément de traction (SG) de préférence flexible.

3. Carrosserie de véhicule utilitaire selon la revendication 2, **caractérisée en ce que** l'élément de traction s'étend en dessous du moyen de tension et relie, dans la première position des ranchers pendants, le moyen de tension tendu à une structure de retenue du cadre de plancher située en dessous du logement inférieur.

4. Carrosserie de véhicule utilitaire selon la revendication 2, **caractérisée en ce que** l'élément de traction est relié, au moins par portions, fixement à une région de bord inférieure de la bâche ou est formé par celle-ci.

5. Carrosserie de véhicule utilitaire selon la revendication 2 ou 3, **caractérisée en ce que** l'élément de traction est formé au moins partiellement par une sangle flexible et le moyen de tension comporte un tendeur de sangle.

6. Carrosserie de véhicule utilitaire selon l'une quelconque des revendications 2 à 4, **caractérisée en ce que** le moyen de tension est relié fixement au rancher pendant respectif dans sa région inférieure et l'élément de traction s'étend respectivement entre le moyen de tension et la structure de retenue.

7. Carrosserie de véhicule utilitaire selon l'une quelconque des revendications 2 à 4, **caractérisée en ce que** l'élément de traction est relié à des extrémités opposées au rancher pendant ou à la bâche et est dévié de manière tournée vers la structure de retenue, et **en ce que** le moyen de tension est inséré dans la trajectoire de l'élément de traction ou est disposé à une extrémité de l'élément de traction.

8. Carrosserie de véhicule utilitaire selon l'une quelconque des revendications 1 à 7, **caractérisée en ce que** l'extrémité inférieure du rancher pendant peut être soulevée pour être détachée du logement inférieur.

9. Carrosserie de véhicule utilitaire selon la revendication 8, **caractérisée en ce que** l'extrémité inférieure du rancher pendant demeure de manière autobloquante dans la position soulevée dans la deuxième position du rancher pendant.

10. Carrosserie de véhicule utilitaire selon la revendication 9, **caractérisée en ce que** l'extrémité inférieure du rancher pendant peut être déplacée à l'encontre d'une force de rappel en prise avec le logement inférieur de manière correspondante à la première position du rancher pendant.

11. Carrosserie de véhicule utilitaire selon la revendication 10, **caractérisée en ce que** la force de rappel est appliquée par un élément de ressort.

12. Carrosserie de véhicule utilitaire selon l'une quelconque des revendications 1 à 11, **caractérisée en ce que** le rancher pendant est déplaçable verticalement par rapport au longeron de toit à son extrémité supérieure.

13. Carrosserie de véhicule utilitaire selon l'une quelconque des revendications 1 à 12, **caractérisée en ce que** la longueur des ranchers pendants entre leurs extrémités inférieures et le guide supérieur peut être modifiée.

14. Carrosserie de véhicule utilitaire selon la revendication 13, **caractérisée en ce que** le rancher pendant comprend une portion inférieure et une portion supérieure, lesquelles peuvent coulisser de manière guidée l'une par rapport à l'autre de manière télescopique.

15. Carrosserie de véhicule utilitaire selon l'une quelconque des revendications 1 à 14, **caractérisée en ce que** le logement inférieur comprend un rail doté d'une rainure ouverte vers le haut et élargie de préférence en forme d'entonnoir.

16. Carrosserie de véhicule utilitaire selon la revendication 15, **caractérisée en ce que** le rancher pendant peut être tendu verticalement contre le rail au moyen du moyen de tension et est, dans la première position, de préférence bloqué de manière à empêcher un coulissement dans la direction longitudinale.

17. Carrosserie de véhicule utilitaire selon l'une quelconque des revendications 1 à 16, **caractérisée en ce que** le logement inférieur fait partie d'une glissière de guidage par galets pour au moins un rancher médian déplaçable longitudinalement.

18. Carrosserie de véhicule utilitaire selon l'une quelconque des revendications 1 à 17, **caractérisée en ce que** la bâche fermée peut être tendue dans la direction longitudinale.

19. Carrosserie de véhicule utilitaire selon l'une quelconque des revendications 1 à 18, **caractérisée en ce qu'**au moins un, de préférence plusieurs, éléments longitudinaux flexibles résistant à la traction sont prévus entre des ranchers pendants adjacents.

20. Carrosserie de véhicule utilitaire selon la revendication 19, **caractérisée en ce que** les éléments longitudinaux sont réalisés de manière continue dans la direction longitudinale sur la longueur de la bâche et peuvent être tendus dans la direction longitudinale.
